# EUROPEAN PATENT SPECIFICATION

(11) **EP 1 590 819 B1**
(45) Date of publication and mention of the grant of the patent: **13.08.2014**
(21) Application number: 04707469.5
(22) Date of filing: 03.02.2004
(51) Int. Cl.: H01H 9/02, H02B 1/044

(54) **AN ASSEMBLY**
BAUGRUPPE
ENSEMBLE

(30) Priority: 07.02.2003 AU 2003900549
(43) Date of publication of application: 02.11.2005
(73) Proprietor: HAGER ELECTRO S.A.S., 67215 Obernai Cedex (FR)
(72) Inventor: BUDDEN, Peter, Parramatta, New South Wales 2150 (AU); PATTON, Stuart, Parramatta, New South Wales 2150 (AU); LEWIS, Geoffrey, Parramatta, New South Wales 2150 (AU)
(74) Representative: Nuss, Laurent
(86) International application number: PCT/AU2004/000120
(87) International publication number: WO 2004/070757

(56) References cited:
- EP-A2- 0 260 672
- DE-A- 2 208 428
- DE-A1- 3 521 634
- DE-A1- 19 809 507
- FR-A- 2 634 588
- US-A- 3 350 531
- US-A- 4 702 711
- US-A- 4 866 222
- US-A- 5 167 465
- US-A- 5 424 502
- US-A- 5 624 167
- US-A- 5 687 836
- US-A- 5 750 947

## Description

### Field of the Invention

This invention is directed to an assembly which can be used as an electric device, a data device, a telecommunication device and the like and where the device comprises a first piece which is attached to a second piece using a rotative locking or rotative attachment system. The device may comprise an electric switch plate, a data/telecommunication socket and the like. The invention will be described with reference to an electric/data switch plate or controller but it should be appreciated that no limitation is meant thereby.

### Background Art

An electric switch assembly typically comprises a mounting plate (also known as a switch plate), which is mounted to a wall. A mechanism is attached to the switch plate. The mechanism can be an on-off switch, a light dimmer knob, a fan control knob and the like. The mechanism is usually mounted to, or in, a rear housing. The mechanism/housing sub assembly is separate from the mounting plate and needs to be attached thereto to complete the assembly.

As an example, a domestic switch comprises a mounting plate (a switch plate) which is screwed or otherwise fastened to a wall. Attached to the switch plate and extending behind the switch plate (and therefore in the wall cavity) is the subassembly which comprises a rocker dolly which can be pushed between an on off position and which is attached to the front of a substantially hollow housing. The housing is attached to the switch plate to complete the domestic switch. Electrical wiring is attached to appropriate sockets in the housing to allow the switch to operate.

A light dimmer operates in a similar manner except that the rocker dolly is replaced by a dimmer knob such that rotation of the dimmer knob will vary the intensity of the light which is controlled by the switch.

A fan controller operates in a similar manner except that the rocker dolly is replaced by a rotatable controller.

Referring particularly to an electric switch, it is known to assemble the housing to the switch plate by means of a rear loading assembly. In the rear loading assembly, the housing comprises some form of push lock arrangement (typically a small deformable barb or shoulder) which locks against a respective engagement on the switch plate. A disadvantage with this type of rear loading assembly is that it is sometimes necessary to remove the housing from the switch plate. To achieve this, it is necessary to push the housing against the push lock arrangement back to the free position and this can damage the push lock arrangement which makes it more difficult to securely reattach the housing later on.

Another disadvantage is that it is sometimes necessary to turn the rocker dolly by 90° (achieved by rotating the housing by 90° relative to the switch plate and then reattaching the housing to the switch plate). This is done to allow the switch to be mounted in either the vertical or horizontal configuration and still allow the switch to operate in the accepted up and down manner as "OFF/ON". However, many rear loading assemblies do not allow the housing to be attached to the switch plate at various angular dispositions. This is often undesirable especially if the switch plate contains other mechanisms or contains a socket etc.

Another type of assembly comprises a front load assembly. With this assembly, the housing is pushed through an opening in the switch plate and from the front face of the switch plate. Again, some form of press locking arrangement is provided to hold the housing in place. While there are some advantages with this type of assembly, a major disadvantage is that an installer MUST remove all cables to be able to fit and ejector tool and thus remove & rotate the switch mechanism

Because of the need to enable the housing to be removed, the push lock arrangement is usually designed to be relatively weak such that the housing can be removed by pushing the housing against the push lock with sufficient force to free the housing from the push lock arrangement. However, this can result in damage to the push lock arrangement even after the housing has been removed once against the push lock action. This damage can result in a loose fit the next time the housing is attached which can increase the possibility of the housing becoming inadvertently detached and falling within the wall cavity.

It is known to more securely hold a front loading housing in place using a separate fastener such as a screw but this requires an extra assembly step which is undesirable.

The housing as described above can contain different types of mechanisms. Commonly, the housing contains a rocker dolly to provide an on/off switch. Alternatively, the housing can contain other types of switches such as toggle switches, push switches, turn switches and the like. The housing can also contain a controller such as a dimmer switch, a fan switch or other similar mechanism. The housing can also contain other components such as data components and telecommunication components (for instance a coaxial cable plug, a telephone plug, other types of data/telecommunication sockets and the like).

Another major disadvantage with convention push lock attachment systems is that it is a requirement in many countries that the housing is to be removed using a tool and not with a person's fingers. For the push lock systems this is achieved by providing a small slot in which a screwdriver blade can fit to pry the housing off the switch plate. However in practice a tradesperson will not use the slot and will manually push the housing off the switch plate. A rotational lock assembly according to the preamble of claim 1 is disclosed in DE 3521634.

It will be clearly understood that, if a prior art publication is referred to herein, this reference does not constitute an admission that the publication forms part of the common general knowledge in the art in Australia or in any other country.

### Object of the Invention

The present invention is directed to a device as described above and where the housing is attached using a rotative lock arrangement as opposed to a push lock arrangement.

In one form, the invention is directed to an assembly according to claim 1. Further embodiments are given in the dependent claims.

In this manner, the disadvantages with the conventional push lock attachment arrangements are at least partially overcome. For instance, the rotative lock attachment means can comprise a bayonet type mounting or a twist lock type mounting which allows the housing to be removed and reattached many times with little or no damage or weakening of the attachment arrangement. Also, the rotative lock attachment means can be made more robust.

Also, the housing can have a tool slot (such as a "phillips head" screwdriver slot) and can be rotated free using the screwdriver.

The assembly may comprise a switch assembly to control the flow of electricity but may also comprise a telecommunication assembly such as a socket to accept a telecommunication device or cable, a data assembly such as a socket to accept a data device or cable and the like.

The assembly can be mounted to a wall, ceiling, floor, other type of support member, and the like although it is envisaged that the assembly may also be not mounted to any support member and may be freestanding or coupled to another member/assembly and the like.

The mounting plate is provided to support the housing and no unnecessary limitation is to be placed on the term mounting plate. The size and shape of the mounting plate can vary as can the thickness and composition of the mounting plate. The mounting plate may be substantially planar but may also comprise curved mounting plates and mounting plates having complex geometry and the like. The mounting plate need not be plate like in configuration and the term is used to encompass anything to which the housing may be attached. However, in an embodiment, the mounting plate may comprise a switch plate, a socket plate, a data plate and the like.

The mounting plate is formed with at least one opening. The shape and size of the opening can vary it being appreciated that one function of the opening is to provide access to a mechanism such as a rocker dolly, a dimmer knob, a fan controller, a socket such as a data socket, telephone socket and the like. Typically, the opening will be round or substantially round and will have a diameter of between 10-50 mm although this can vary. A plurality of openings can be provided. Therefore, the device can have a number of switches, knobs, sockets etc. The opening can include a "blind" opening or a blank where the plate has a area or zone which can be knocked out, drilled out or otherwise opened to form the opening.

The assembly can be provided with a housing which is attachable to the mounting plate. The size and shape of the housing can vary and will depend on if a mechanism is attached to /supported by or otherwise operatively associated with the housing. Typically, the housing also contains attachment means/small sockets etc to allow electric/data/telecommunication wires to be attached to the housing. These attachment means etc are typically on a rear portion of the housing although this can vary. The housing may have a front portion containing a recess, a hollow, or the housing may be substantially hollow to support/contain or to be operatively associated with a mechanism.

The term "mechanism" is meant to include a rocker dolly, a dimmer knob, a controller such as a fan controller, other types of dollies such as a rotating dolly, a push dolly and the like. The term dolly is used to define the switch which is pushed, pivoted, rotated etc to control the flow of electricity to the device which is controlled by the assembly. The device may comprise a light bulb, a fan and the like. However no limitation is meant by this explanation.

A front portion of the housing is accessible through the opening in the mounting plate. Thus, if a rocker dolly (for instance) is supported by the housing, it can be manipulated by person's finger when the housing is attached to the mounting plate.

The housing is attached relative to the mounting plate using a rotative lock attachment means as opposed to a push lock attachment means which is conventional. The rotative lock attachment means may comprise a "bayonet type" mounting or a "twist lock" type mounting and the like.

Typically, the rotative lock attachment means will comprise at least one projection on one of the parts (i.e. the housing or the mounting plate or perhaps even some other part) which engages with a recess on the other part. It is envisaged that the housing will contain the at least one projection and the mounting plate will contain the at least one recess. However, it is possible for the housing to contain the at least one recess and the mounting plate to contain the at least one projection. Alternatively, each part can contain at least one projection and at least one recess.

It is preferred that the rotative lock attachment means comprises at least two projections which engage with at least two recesses. It is more preferred that the rotative lock attachment means comprises more than two projections and may comprise between 3-6 projections (or even more) which engage in respective 3-6 recesses. This provides a good solid locking action which minimises any inadvertent removal of the housing from the mounting plate.

It is preferred that the rotative lock attachment means provides some form of locking action to prevent or at least reduce inadvertent counter rotation of the housing to inadvertently release the housing when not required. However, it is also envisaged that some separate means may be provided to lock or latch the housing relative to be mounting plate and which may be separate to or in addition to the rotative lock attachment means. For ease of assembly, it is preferred that the rotative lock attachment means provides the locking action.

### Brief Description of the Drawings

Embodiments of the invention will be described with reference to the following drawings:
Figure 1. Illustrates a front view of a mounting plate having a rocker dolly.
Figure 2. Illustrates a rear view of the switch plate of Figure 1 and illustrating a housing which is twist locked to the mounting plate.

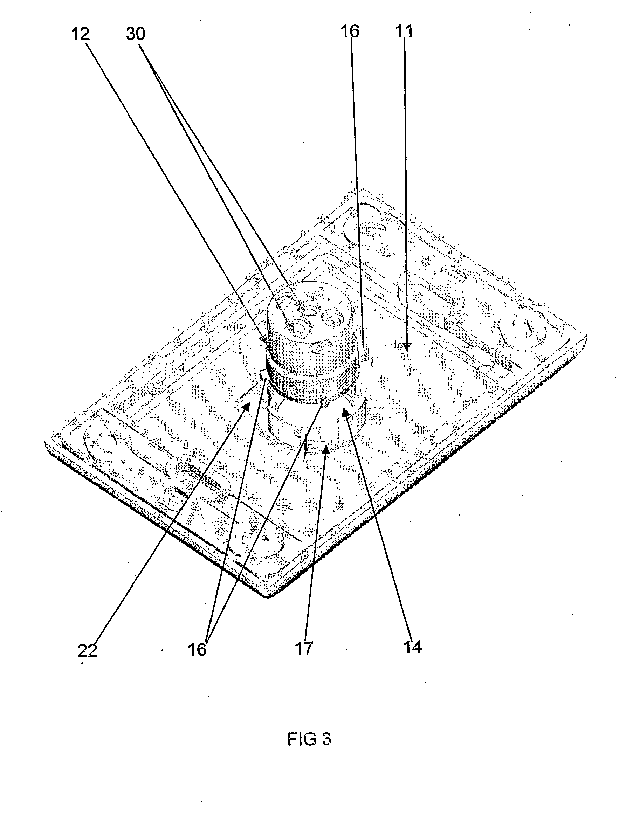

Figure 3. Illustrates the housing in the "unlocked" position.
Figure 4. Illustrates a close up view of the housing of Figure 3.
Figure 5. Illustrates a rear view of the housing.
Figure 6. Illustrates a front view of the housing.

### Best Mode

Referring to the figures, there is illustrated the main features of the invention which is a rotative lock arrangement of the housing to the mounting plate.

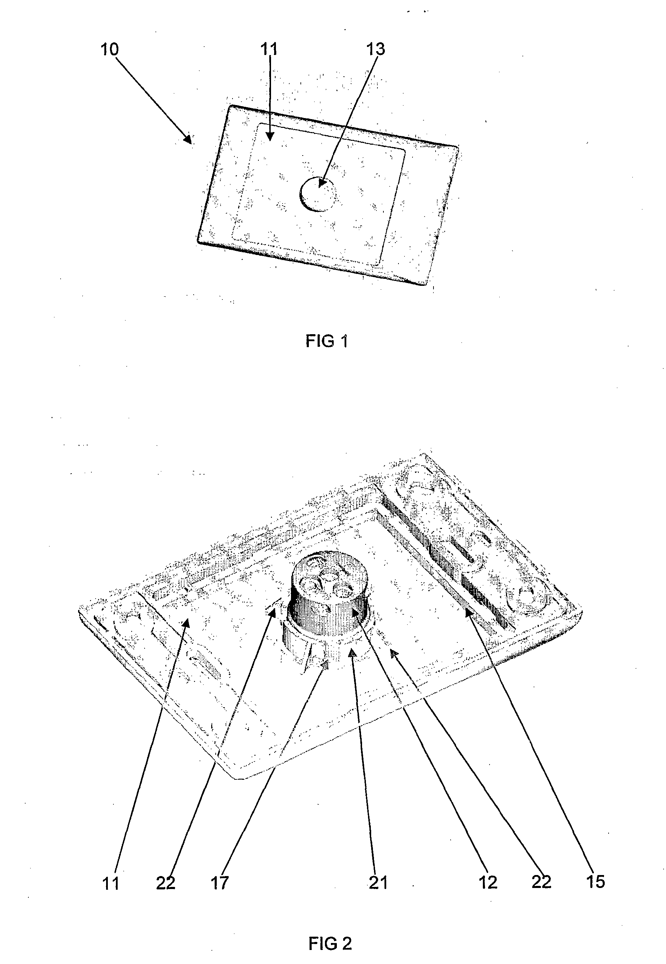

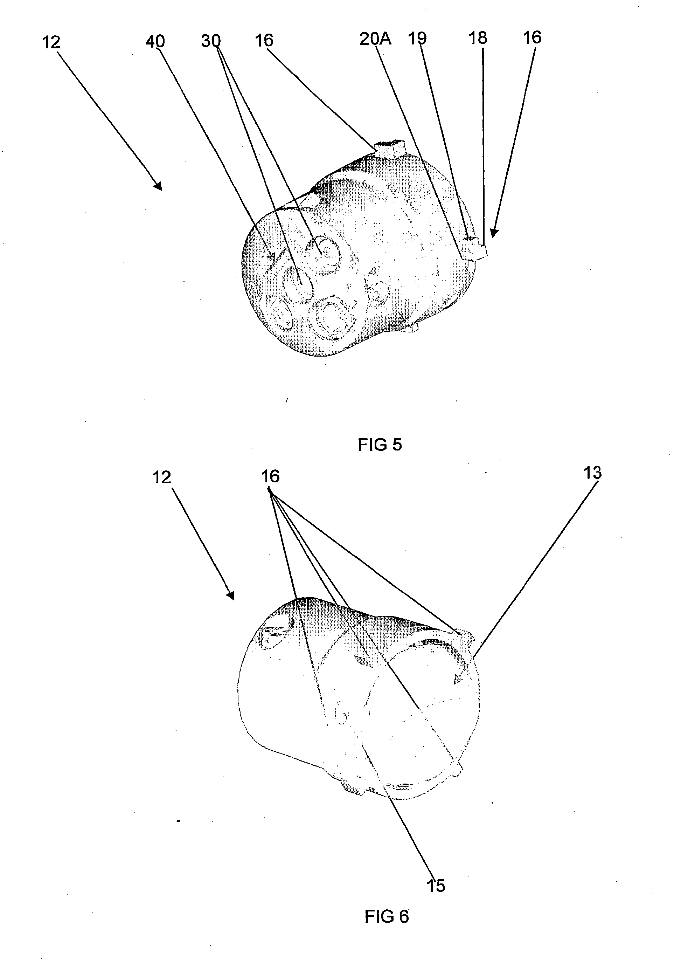

Referring initially to figures 1-2, there is illustrated a switch 10. The switch 10 comprises three main parts being a mounting plate in the form of a switch plate 11, and a rear housing 12 (see also figures 5,6) which supports a mechanism, which in this particular embodiment comprises a rocker dolly 13.

The switch plate 11 is typically formed of plastic material and typically contains strengthening ribs 15 which are moulded into the switch plate. Sometimes, the switch plate contains a removable cover plate. The switch plate 11 contains a round opening 14 through which the rocker dolly 13 projects.

Housing 12 is rear loaded to the switch plate which means that the housing is attached to a rear portion of the switch plate 11 and is fixed from the rear. The housing will be provided with small sockets or terminal attachments 30 (see figure 5) to couples to electric leads (not illustrated), the sockets and the electric leads being entirely conventional.

Best illustrated in figure 6, the front of housing 12 pivotly supports a rocker dolly 13. The dolly 13 pivots about a small pin in an aperture 15. Of course, other types of mechanisms can be used such as a dimmer knob, a fan controller and the like.

Housing 12 is attached to the switch plate 11 by a twist lock action. In the particular embodiment, the housing contains a plurality (in this case 4) equally spaced projections 16 which pass into recesses 17 on the rear face of switch plate 11. Specifically, each projection 16 is L-shaped in configuration having a first vertical portion 18 and a second substantially horizontal portion 19 (best illustrated in figure 5). Each recess 17 is also substantially L-shaped and has a vertical leg portion and a horizontal leg portion.

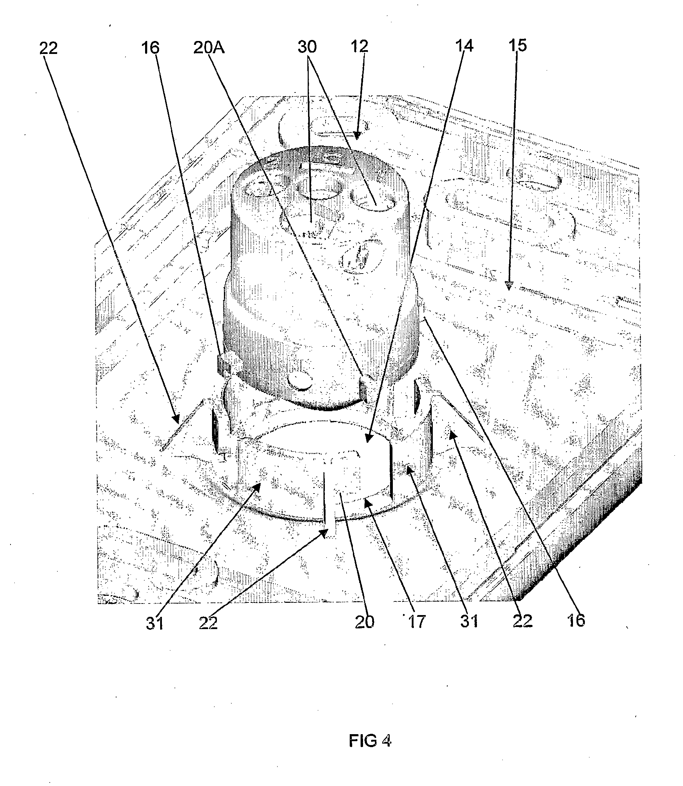

To provide a locking action to prevent the housing from inadvertently twisting out of engagement with the switch plate, some (or all) of the recesses are not exactly L-shaped but instead have a small domed portion 20 (see figure 4) at the end of the horizontal leg portion of the L-shaped recess. The corresponding projection 16 has a small bump 20A (see figure 4) on the horizontal part of the leg portion. The small bump 20A on the projection press fits into the small domed portion 20 in the recess to provide some locking or clamping action against inadvertent release of the housing. It is preferred that some of the projections are provided with the small bump and some are not. The reason for this is that if all the projections were provided with a small bump, it might provide a quite large resistance against unlocking and removal of the housing which means that the housing will need to be very strongly counter rotated to release it from the switch plate. It is considered that such force is unnecessary and therefore only some of the projections are provided with the bump. Of course, various other means may be provided to provide this locking action. For instance, each projection may be provided with a smaller bump to provide a lower force to release the housing from the switch plate.

The recesses 17 in the switch plate are formed partially in a collar 21. Collar 21 extends about the opening 14 in the switch plate. Collar 21 in the particular embodiment comprises four arcuate plate like portions 31 (see figure 4) which are spaced apart to define the vertical part of the L-shaped recess. Reinforcement struts 22 are provided on the rear of each plate like portion to provide strength.

To release the housing, it is necessary to apply an initial small force to separate the bump on the projection from engagement in the domed portion in the recess. After that, the housing can be simply twisted and lifted out of engagement with the switch plate. The housing can be simply reattached with little or no damage to the rotative locking means. Moreover, the housing can be rotated by 90° and simply reattached such that the rocker dollies work along a sideways motion as opposed to an up-and-down motion. Another advantage is that various different mechanisms can now be attached.

Figure 5 illustrates a tool slot 40 in the form of a screwdriver slot to allow the housing to be removed using a screwdriver. The rotative locking action makes the use of this type of tool particularly useful.

It should be appreciated that the particular attachment arrangement need not be limited to the devices described above and can have a wide use. For instance, the housing may contain a telephone plug or a data plug as the mechanism. The dolly may comprise a rocker dolly, a rotating dolly, a push dolly, a tactile switch and the like. Alternatively, the housing may be provided with a circuit identifying clip or a blank plate. A plurality of housings can be twist locked to a single switch plate.

## Claims

1. An assembly comprising a mounting plate (11) which has at least one opening, (14) and a housing (12) which is attachable to the mounting plate such that a front portion of the housing is accessible through the opening, the housing (12) and/or mounting plate (11) containing a rotative look attachment means to allow the housing (12) to be attached to the mounting plate (11) using a rotative action, the rotative lock attachment means comprising at least one projection (16) on one of the parts, which engages with a recess (17) on the other part, **characterized in that** the recess (17) or projection (16) in the mounting plate (11) being formed in a collar (21) extending about the opening (14).

2. The assembly of claim 1, which comprises an eletrical switch assembly, the housing (12) comprising a switch member which is accessible through the opening (14) in the mounting plate (11).

3. The assembly of claim 2, wherein the housing has at least one projection (16) and the mounting plate (11) has at least one recess (17) to enable the housing to be attached to the mounting plate using a rotative look action.

4. The assembly of claim 3, wherein the projection (16) is substantially L shaped and the recess (17) is substantially L shaped.

5. The assembly of claim 4, wherein the mounting plate (11) has a rear face, a collar extending from the rear face of the mounting plate (11), the at least one recess (17) being in the collar (21).

6. The assembly of claim 5, wherein the collar comprises a plurality of separate arcuate portions (31), the arcuate portions (31) being spaced apart from each other, the spacing between two of the arcuate portions (31) comprising part of the recess (17).

7. The assembly of claim 4, wherein the L shaped recess (17) compries a vertical part (18) which extends vertically from the mounting plate (11), and a horizontal part (19), and a small domed portion (20) in the horizontal part (19), and the projection comprises a small bump (20A), the bump (20A) engaging with the domed portion (20) upon locking of the housing (12) to the mounting plate (11).

8. The assembly of claim2, comprising a tool slot (50) in the housing (12) to enable a tool to rotate the housing (12) relative to the mounting plate (11).

9. The assembly of claim 2, wherein the housing (12) contains components selected from the group consisting of a rocker dolly to provide an on/off switch, a toggle switch, a push switch, a turn switch, a controller such as a dimmer switch or a fan switch.

10. The assembly of claim 1, wherein the housing (12) contains components selected from the group consisting of data components, telecommunication components, a coaxial cable plug and a telephone plug.

## Patentansprüche

1. Vorrichtung, umfassend eine Grundplatte (11) mit wenigstens einer Öffnung (14) und ein Gehäuse (12), welches an der Grundplatte so befestigbar ist, dass ein vorderer Teil des Gehäuses durch die Öffnung zugänglich ist, wobei das Gehäuse (12) und/oder die Grundplatte (11) ein drehbares Verriegelungs- und Befestigungsmittel umfasst/umfassen, um das Gehäuse mit Hilfe einer Drehbewegung an der Grundplatte (11) zu befestigen, wobei das drehbare Verriegelungs- und Befestigungsmittel wenigstens einen Vorsprung (16) an einem seiner Teile umfasst, welcher in eine Aussparung (17) in dem anderen Teil eingreift, **dadurch gekennzeichnet, dass** die Aussparung (17) oder der Vorsprung (16) in der Grundplatte (11) in einem Bund oder Kragen (21) ausgebildet ist, der sich um die Öffnung (14) erstreckt.

2. Vorrichtung nach Anspruch 1, die eine elektrische Schaltvorrichtung umfasst, wobei das Gehäuse (12) ein Schaltelement umfasst, welches durch die Öffnung (14) in der Grundplatte (11) zugänglich ist.

3. Vorrichtung nach Anspruch 2, wobei das Gehäuse wenigstens einen Vorsprung (16) und die Grundplatte (11) wenigstens eine Aussparung (17) aufweisen, um das Gehäuse mit Hilfe einer Drehverriegelungsbewegung an der Grundplatte zu befestigen.

4. Vorrichtung nach Anspruch 3, wobei der Vorsprung (16) im Wesentlichen L-förmig und die Aussparung (17) im Wesentlichen L-förmig ausgebildet sind.

5. Vorrichtung nach Anspruch 4, wobei die Grundplatte (11) eine Rückseite aufweist, ein Bund sich von der Rückseite der Grundplatte (11) erstreckt und die wenigstens eine Aussparung (17) in dem Bund (21) vorgesehen ist.

6. Vorrichtung nach Anspruch 5, wobei der Bund eine Vielzahl von einzelnen gebogenen Abschnitten (31) aufweist, die gebogenen Abschnitte (31) im Abstand voneinander angeordnet sind und der Abstand zwischen zwei der gebogenen Abschnitte (31) einen Teil der Aussparung (17) umfasst.

7. Vorrichtung nach Anspruch 4, wobei die L-förmige Aussparung (17) einen vertikalen Teil (18) umfasst, der sich vertikal von der Grundplatte (11) erstreckt, und einen horizontalen Teil (19) sowie einen gering gewölbten Abschnitt (20) in dem horizontalen Teil (19), und der Vorsprung eine kleine Welle (20A) umfasst, wobei die Welle (20A) in den gewölbten Abschnitt (20) beim Verriegeln des Gehäuses (12) an der Grundplatte (11) eingreift.

8. Vorrichtung nach Anspruch 2, umfassend einen Werkzeugschlitz (50) in dem Gehäuse (12), um es einem Werkzeug zu ermöglichen, das Gehäuse (12) bezüglich der Grundplatte (11) zu drehen.

9. Vorrichtung nach Anspruch 2, wobei das Gehäuse (12) Bauteile aus der Gruppe bestehend aus umfasst: einen Rollenhalter, um einen An-/Ausschalter bereitzustellen, einen Kippschalter, einen Druckschalter, einen Drehschalter, einen Regler wie etwa einen Dimm-Schalter oder einen Gebläseschalter.

10. Vorrichtung nach Anspruch 1, wobei das Gehäuse (12) Bauteile aus der Gruppe bestehend aus umfasst: Datenbauteile, Telekommunikationsbauteile, einen Koaxialkabelstecker und einen Telefonstecker.

## Revendications

1. Ensemble comprenant une plaque de montage (11) qui comporte au moins une ouverture (14), et un boîtier (12) qui peut être fixé sur la plaque de montage de sorte qu'une partie avant du boîtier soit accessible à travers l'ouverture, le boîtier (12) et/ou la plaque de montage (11) contenant un moyen de fixation à verrouillage rotatif pour permettre au boîtier (12) d'être fixé sur la plaque de montage (11) en utilisant une action de rotation, le moyen de fixation à verrouillage rotatif comprenant au moins une protubérance (16) sur une des parties, qui s'engage avec un évidement (17) sur l'autre partie, **caractérisé en ce que** l'évidement (17) ou la protubérance (16) dans la plaque de montage (11) est formé dans un collier ou une bague (21) s'étendant autour de l'ouverture (14).

2. Ensemble selon la revendication 1, qui comprend un ensemble de commutateur électrique, le boîtier (12) comprenant un élément de commutateur qui est accessible à travers l'ouverture (14) dans la plaque de montage (11).

3. Ensemble selon la revendication 2 dans lequel le boîtier possède au moins une protubérance (16) et la plaque de montage (11) possède au moins un évidement (17) pour permettre au boîtier d'être fixé sur la plaque de montage en utilisant une action de verrouillage rotatif.

4. Ensemble selon la revendication 3, dans lequel la protubérance (16) est globalement en forme de L et l'évidement (17) est globalement en forme de L.

5. Ensemble selon la revendication 4, dans lequel la plaque de montage (11) possède une face arrière, un collier s'étendant depuis la face arrière de la plaque de montage (11), le au moins un évidement (17) se trouvant dans le collier (21).

6. Ensemble selon la revendication 5, dans lequel le collier comprend une pluralité de parties courbes séparées (31), les parties courbes (31) étant écartées les unes des autres, l'espacement entre deux des parties courbes (31) comprenant une partie de l'évidement (17).

7. Ensemble selon la revendication 4, dans lequel l'évidement en forme de L (17) comprend une partie verticale (18) qui s'étend verticalement depuis la plaque de montage (11), et une partie horizontale (19), et une petite partie bombée (20) dans la partie horizontale (19), et la protubérance comprend une petite bosse (20A), la bosse (20A) s'engageant avec la partie bombée (20) au moment du verrouillage du boîtier (12) sur la plaque de montage (11).

8. Ensemble selon la revendication 2, comprenant une fente d'outil (50) dans le boîtier (12) pour permettre à un outil de faire tourner le boîtier (12) par rapport à la plaque de montage (11).

9. Ensemble selon la revendication 2, dans lequel le boîtier (12) contient des composants sélectionnés à partir du groupe constitué d'un interrupteur à levier pour permettre une commutation ouvert/fermé, d'un interrupteur à bascule, d'un interrupteur à bouton-poussoir, d'un interrupteur rotatif, d'un contrôleur tel qu'un variateur ou un interrupteur de ventilation.

10. Ensemble selon la revendication 1, dans lequel le boîtier (12) contient des composants sélectionnés à partir du groupe constitué de composants de données, de composants de télécommunication, d'une fiche de câble coaxial et d'une fiche téléphonique
